# EUROPÄISCHE PATENTSCHRIFT

(11) **EP 2 625 033 B1**
(45) Veröffentlichungstag und Bekanntmachung des Hinweises auf die Patenterteilung: **27.11.2013**
(21) Anmeldenummer: 11758462.3
(22) Anmeldetag: 16.09.2011
(51) Int. Cl.: B32B 9/02, C14B 7/02, C14B 7/04, B32B 5/02, B32B 5/18, B32B 7/12, B32B 9/04, B32B 27/06, B32B 37/14

(54) **VERFAHREN ZUR HERSTELLUNG VON LEDERTEILEN**
METHOD FOR PRODUCING LEATHER PARTS
PROCÉDÉ DE PRODUCTION DE PIÈCES DE CUIR

(30) Priorität: 07.10.2010 DE 102010042103
(43) Veröffentlichungstag der Anmeldung: 14.08.2013
(73) Patentinhaber: Bader GmbH & Co. KG, 73033 Göppingen (DE)
(72) Erfinder: WIEKE, Martin, 76139 Karlsruhe (DE); MOLDASCHEL, Daniel, 73329 Kuchen (DE); BADER, Thomas Christof, 73033 Göppingen (DE)
(74) Vertreter: Wolf, Eckhard
(86) Internationale Anmeldenummer: PCT/EP2011/066115
(87) Internationale Veröffentlichungsnummer: WO 2012/045565

(56) Entgegenhaltungen:
- EP-A1- 1 413 426
- WO-A1-95/02072
- DE-U1- 20 317 423
- GB-A- 774 362

## Beschreibung

Die Erfindung betrifft ein Verfahren zur Herstellung von sattlereitechnisch verarbeitbaren Lederteilen aus vorgefertigtem Fertigleder insbesondere für den Automobilbereich, vgl. z.B. die Druckschrift EP-A-1413426.

Ausgangspunkt für die Herstellung von Leder ist stets die rohe Tierhaut, die nach dem Waschen, Enthaaren, Entfleischen und dem Spalten gebeizt, gepickelt, entkälkt und anschließend gegerbt wird. Danach wird Gerbflüssigkeit über eine Presse herausgepresst, so dass der Feuchtigkeitsgehalt auf ca. 50 bis 60 % herabgesetzt wird. In einem weiteren Verfahrensschritt werden die gegerbten Tierhäute gefalzt, d.h. mittels einer Spiralmesserwalze auf eine gleichmäßige Dicke in der Größenordnung von 1 bis 2 mm rückseitig abgehobelt. Das verbleibende Leder kann nun zunächst gefärbt und anschließend getrocknet werden. Das gegerbte, gefärbte und getrocknete Leder wird auch als Crust-Leder bezeichnet. Nach einer Crust-Sortierung kommt schließlich die Zurichtung des Leders. Dies bedeutet zunächst eine chemische Oberflächenbeschichtung, bei der oberflächlich eine Grundierung, eine Farbschicht und anschließend ein Schutzlack aufgetragen werden. Optional kann sich nach der Grundierung auch eine Prägung des Leders anschließen, die zu charakteristischen Oberflächenstrukturen führt. Das Ergebnis dieser Oberflächenbehandlung ist das sogenannte Fertigleder, das auch als Serienleder bezeichnet wird. Das Fertigleder wird üblicherweise in der Stanzerei auf vorgeschriebene Formen und Umrisse zugeschnitten. Beim Automobil-Fertigleder hat man noch Materialstärken zwischen 1 und 2 mm. Andererseits ist das Bestreben der Fahrzeugindustrie, dass auch Gewichtseinsparungen erzielt werden können.

Ausgehend hiervon liegt der Erfindung die Aufgabe zugrunde, ein Verfahren zur Herstellung von sattlereitechnisch verarbeitbaren Lederteilen aus vorgefertigtem, insbesondere zugerichtetem Automobil-Fertigleder zu entwickeln, das besonders leicht ist und dennoch relativ hohe Anforderungen an die Dehnbarkeit, Zugfestigkeit und eine leichte Bearbeitbarkeit erfüllt.

Zur Lösung dieser Aufgabe wird die im Patentanspruch 1 angegebene Merkmalskombination vorgeschlagen, vorteilhafte Ausgestaltungen und Weiterbildungen der Erfindung ergeben sich aus den abhängigen Ansprüchen.

Die Erfindung geht von der Erkenntnis aus, dass Fertigleder noch einer erheblichen Wandstärkenreduzierung zugänglich ist, wenn man die hierfür in Betracht kommenden Spaltprozesse richtig beherrscht. Auf diese Weise lässt sich beispielsweise mit einer Trockenspaltmaschine eine Wandstärke des Fertigleders bis herab zu etwa 0,4 mm, also bis zu etwa 15 % bis 50 % der üblichen Wandstärke des Automobil-Fertigleders, erzielen. Andererseits birgt eine solche Wandstärkenreduzierung die Gefahr, dass die Zugfestigkeit und die Reißfestigkeit des Leders nicht mehr ausreicht, um die Anforderungen an die Strapazierfähigkeit beim Gebrauch zu erfüllen. Um auch diesen Nachteil zu vermeiden, wird gemäß der Erfindung vorgeschlagen, dass das Fertigleder in einem Spaltprozess unter Bildung einer zusammenhängenden und geschlossenen Dünnlederhaut mit einer auf das Fertigleder bezogenen anteiligen Wandstärke von 15 bis 50 % und einer Zwischenspaltlederhaut mit einer anteiligen Wandstärke von 50 bis 85 % aufgetrennt wird, dass die Dünnlederhaut unter Bildung vorgegebener Dünnlederzuschnitte in einem Stanzprozess zugeschnitten wird, dass zu den Dünnlederzuschnitten komplementäre Kaschierzuschnitte aus gegenüber Leder spezifisch leichterem Textil-, Faser- und/oder Schaummaterial hergestellt werden und dass die Kaschierzuschnitte unter Bildung von Leichtlederteilen flächendeckend auf die Rückseite der komplementären Dünnlederzuschnitte aufkaschiert werden. Die Kaschierzuschnitte haben hier vor allem die Aufgabe, die Zugfestigkeit und die Reißfestigkeit der Leichtlederteile ohne wesentliche Gewichtszunahme zu erhöhen. Gleichzeitig kann durch entsprechende Auswahl der Materialzusammensetzung in den Kaschierzuschnitten die Haptik der Leichtlederteile in gewünschter Weise beeinflusst werden. Ein weiteres Kriterium für die Materialauswahl bei den Kaschierzuschnitten besteht darin, dass die Dehnbarkeit der Dünnlederhaut und der Kaschierzuschnitte so aufeinander abgestimmt wird, dass bei einer mechanischen Beanspruchung das Dünnleder nicht vor dem Kaschiermaterial reißt.

Eine weitere Besonderheit dieses Herstellungsverfahrens besteht darin, dass zusätzlich eine bereits gegerbte Zwischenspaltlederhaut anfällt, die entweder unmittelbar oder nach einer entsprechenden Aufarbeitung sattlereitechnisch verarbeitet werden kann. Vorteilhafterweise wird hierzu die Zwischenspaltlederhaut an ihrer Oberfläche zugerichtet, beispielsweise also gefärbt, lackiert und/oder geprägt und anschließend unter Bildung vorgegebener Zwischenspaltlederzuschnitte in einem Stanzprozess zur sattlereitechnischen Weiterverarbeitung zugeschnitten und gegebenenfalls nochmals auf eine gewünschte Wandstärke gespalten. Grundsätzlich ist es möglich, dass zu den Stanzlederzuschnitten komplementäre Kaschierzuschnitte aus Textil- oder Kunststoffmaterial hergestellt und die Kaschierzuschnitte auf die Rückseite der komplementären Zwischenspaltlederzuschnitte aufkaschiert werden.

Vorteilhafterweise weist das vorgefertigte Fertigleder eine Ausgangswandstärke von 1,0 bis 2,0 mm auf. Die Dünnlederhaut weist beim Spaltprozess demgemäß eine Wandstärke von mindestens 0,2 bis 0,5 mm auf.

Eine bevorzugte Ausgestaltung der Erfindung sieht vor, dass die Kaschierzuschnitte als mehrschichtige Textilgewirke ausgebildet sind. Insbesondere können die Kaschierzuschnitte als Abstandsgewirke mit einer sandwichartig zwischen zwei Gewirkeschichten eingeschlossenen Stäbchenschicht ausgebildet sein. Um die Anforderungen an die Dehnbarkeit des Kaschiermaterials im Verhältnis zu dem Dünnleder erfüllen zu können, kann es von Vorteil sein, dass die beiden Gewirkeschichten unterschiedliche Dehnungswerte und/oder Zugfestigkeiten aufweisen. Es hat sich dabei als vorteilhaft erwiesen, wenn die Kaschierzuschnitte auf ihrer dem Dünnlederzuschnitt oder dem Zwischenspaltlederzuschnitt zugewandten Seite eine niedrigere Dehnbarkeit als auf ihrer anderen Seite aufweisen.

Andererseits kann die Haptik der Leichtlederteile in vorteilhafter Weise dadurch beeinflusst werden, dass die Kaschierzuschnitte auf ihrer dem Dünnlederzuschnitt oder dem Zwischenspaltlederzuschnitt abgewandten Breitseite eine elastische, vorzugsweise als Faserschicht ausgebildete Polsterschicht aufweisen.

Für die Herstellung besonders dünnwandiger und trotzdem zusammenhängender und geschlossener Dünnlederhäute aus dem Fertigleder wird der Spaltprozess zweckmäßig unter Verwendung eines umlaufenden Bandmessers mit unsymmetrischem Schneidkeil durchgeführt. Üblicherweise ist der Schneidkeil unterschiedlich stark angeschliffen, wobei die nur wenig angeschliffene Seite der zu erzeugenden Dünnlederhaut zugewandt ist.

Im Folgenden wird die Erfindung anhand der Zeichnung näher erläutert. Es zeigen
- Fig. 1: ein Blockschema mit den wesentlichen Verfahrensschritten, die für die Herstellung von Automobil-Fertigleder und von erfindungsgemäßen Leichtlederteilen notwendig sind;
- Fig. 2: schematische Schnittdarstellungen der verschiedenen Verfahrenserzeugnisse, die im Zuge der Herstellung der Leichtlederteile anfallen.

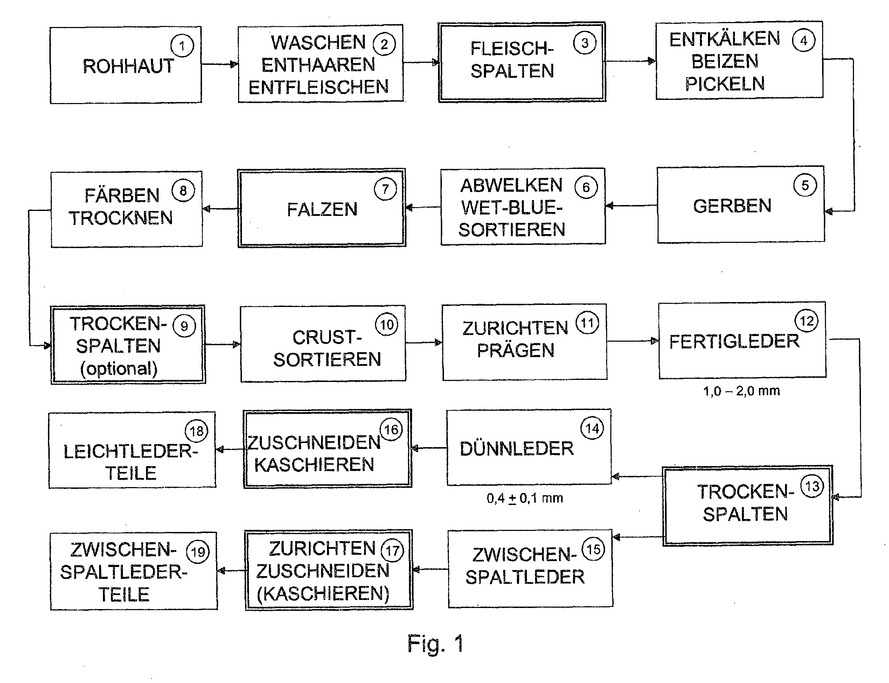

Für die Herstellung der erfindungsgemäßen Leichtlederteile sind die in Fig. 1 in einem Blockschaltbild dargestellten Verfahrensschritte auszuführen. Der vorbekannte Stand der Technik umfasst dabei die von der Rohhaut 1 bis zum Fertigleder 12 aufgezeigten Verfahrensschritte:

Nach dem Waschen, Enthaaren und Entfleischen im Verfahrensschritt 2 kommt im Verfahrensschritt 3 zunächst noch das sogenannte Fleischspalten, bei welchem die Haut in die gewünschte Dicke von ca. 2,2 bis 2,6 mm gespalten wird. Danach wird die Tierhaut im Verfahrensschritt 4 entkälkt, gebeizt und gepickelt. Dabei kommt es zum Aufquellen der Haut und zu einem Hautaufschluss, der das beim anschließenden Gerbvorgang 5 erwünschte Penetrieren der Gerbstoffe in die Haut verbessert. Beim Gerben wird durch eine irreversible Bindung von Gerbstoffen an die Haut das Hautgefüge stabilisiert und konserviert und damit das Leder hergestellt. Nach dem Gerbvorgang 5 wird bei einem sogenannten Abwelken 6 Gerbflüssigkeit über eine Presse herausgepresst, so dass der Feuchtigkeitsgehalt auf ca. 50 bis 60 % herabgesetzt wird. Im Anschluss an das Abwelken wird die sogenannte Wet-Blue-Sortierung nach vorgegebenen Qualitätsmerkmalen in verschiedene Lederklassen durchgeführt. In einem weiteren Verfahrensschritt 7 werden die auf diese Weise vorbereiteten Tierhäute gefalzt, d.h. mittels einer Spiralmesserwalze auf eine gleichmäßige Dicke in der Größenordnung von 1 bis 2 mm rückseitig abgehobelt. Die Falzspäne werden ebenso wie die Abfallprodukte 20 beim Fleischspalten aufgesammelt und einer Weiterverarbeitung zugeführt oder verworfen. Das verbleibende Leder kann nun im Verfahrensschritt 8 gefärbt und anschließend getrocknet werden.

Ein optionaler Verfahrensschritt 9 ist das sogenannte Trockenspalten, das im Anschluss an das Färben und Trocknen durchgeführt wird. Hier kann die Lederstärke egalisiert und auf ein gewünschtes Maß eingestellt werden. Das gegerbte, gefärbte und getrocknete Leder wird auch als Crust-Leder bezeichnet. Nach einer Crust-Sortierung 10, die ebenfalls nach vorgegebenen Qualitätsmerkmalen durchgeführt wird, kommt schließlich die Zurichtung des Leders im Verfahrensschritt 11. Dies bedeutet eine chemische Oberflächenbeschichtung, bei der oberflächlich eine Grundierung, eine Farbschicht und anschließend ein Schutzlack aufgetragen wird. Optional kann sich an die Grundierung eine Prägung des Leders anschließen, die zu charakteristischen Oberflächenstrukturen führt. Das Ergebnis dieser Oberflächenbehandlung ist das sogenannte Fertigleder 12, das auch als Serienleder bezeichnet wird. Bei einem Fertigleder, das überwiegend im Automobilbereich eingesetzt wird, hat man noch Materialstärken zwischen 1 und 2 mm. Anderseits ist das Bestreben der Automobilindustrie, dass Gewichtseinsparungen erzielt werden.

Eine Besonderheit der Erfindung besteht demgemäß darin, dass ausgehend vom Fertigleder 12 ein Leichtleder hergestellt wird, das hohe Anforderungen an die Dehnbarkeit und Zugfestigkeit erfüllt und das sattlereitechnisch einfach verarbeitet werden kann. Das Fertigleder wird zu diesem Zweck in einer Verfahrensstufe 13 einer Trockenspaltmaschine zugeführt und in einem Spaltvorgang in ein hochwertiges Dünnleder 14 mit einer Wandstärke von ca. 0,4 ± 0,1 mm und ein ebenfalls der Lederverarbeitung zugängliches Zwischenspaltleder 15 aufgeteilt. Das auf diese Weise hergestellte Dünnleder erfüllt aber noch nicht die für den Ledergebrauch vorgeschriebenen Anforderungen an die Dehnbarkeit, Zugfestigkeit und Reißfestigkeit. Um dies zu erreichen, besteht eine weitere Besonderheit der Erfindung darin, dass die in einer Stanzmaschine zugeschnittenen Dünnlederzuschnitte 14 mit einem geeigneten Kaschiermaterial rückseitig kaschiert werden. Zu diesem Zweck werden zu den Dünnlederzuschnitten komplementäre Kaschierzuschnitte aus gegenüber Leder spezifisch leichterem Textil-, Kunststoff-, Faser- und/oder Schaumstoffmaterial hergestellt und unter Bildung von Leichtlederteilen 18 flächendeckend auf die Rückseite der komplementären Dünnlederzuschnitte aufkaschiert. Die Kaschierzuschnitte haben hier vor allem die Aufgabe, die Zugfestigkeit und die Reißfestigkeit der Leichtlederteile ohne wesentliche Gewichtszunahme zu erhöhen. Gleichzeitig kann durch entsprechende Auswahl der Materialzusammensetzung in den Kaschierzuschnitten die Haptik der Leichtlederteile 18 beeinflusst werden. Ein wichtiges Kriterium für die Materialauswahl besteht außerdem darin, dass die Dehnbarkeit des Dünnleders und des Kaschiermaterials so aufeinander abgestimmt wird, dass bei einer mechanischen Beanspruchung das Dünnleder nicht vor dem Kaschiermaterial reißt.

In der Trockenspaltstation 13 fällt zusätzlich ein Zwischenspaltleder 15 an, das entweder unmittelbar oder nach einer entsprechenden Aufarbeitung sattlereitechnisch verarbeitet werden kann. Insbesondere wird das Zwischenspaltleder 15 zunächst an seiner Oberfläche zugerichtet, beispielsweise gefärbt, lackiert und optional geprägt. Anschließend wird das Zwischenspaltleder unter Bildung vorgegebener Zwischenspaltlederzuschnitte in einem Stanzprozess für die Weiterverarbeitung zugeschnitten und gegebenenfalls auf eine gewünschte Wandstärke gespalten. Zur Verbesserung der mechanischen Eigenschaften können die Zwischenspaltlederzuschnitte optional auf ihrer Rückseite mit einem Kaschiermaterial kaschiert werden. Dabei werden die Zwischenspaltlederteile 19 gebildet.

Für die Herstellung der Kaschierzuschnitte wird vor allem bei den Leichtlederteilen ein mehrschichtiges Textilgewirke, beispielsweise ein Abstandsgewirke verwendet, das eine sandwichartig zwischen zwei Gewirkeschichten eingeschlossene Stäbchenschicht aufweist.

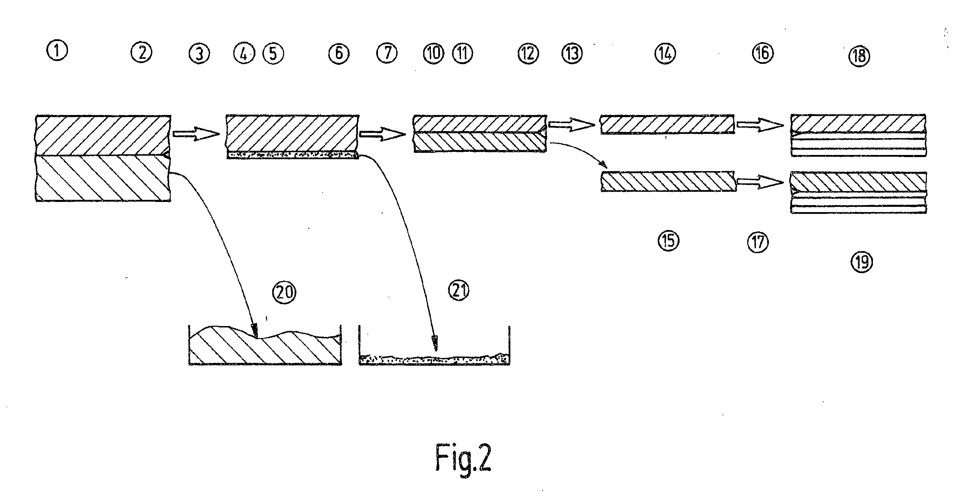

In Fig. 1 sind die Verfahrensschritte, die zu einer Veränderung der Materialstärke führen, durch doppelte Umrandungen gekennzeichnet. In dem Schema nach Fig. 2 ist in vergrößerter Schnittdarstellung der Verlauf der Materialstärke während des Herstellungsprozesses schematisch angedeutet. Die Bezugszeichen in Fig. 2 entsprechen den durchnummerierten Verfahrensschritten in Fig. 1. Ausgehend von der Rohhaut 1, werden im Zuge des Fleischspaltens nach dem Verfahrensschritt 3 der anfallende Hautrest 20 und beim Falzvorgang gemäß Verfahrensschritt 7 die anfallenden Falzspäne 21 verworfen oder einer Weiterverarbeitung zugeführt. Die Besonderheit der Erfindung beginnt mit dem Fertigleder 12, das im Zuge eines Trockenspaltprozesses 13 in das Dünnleder 14 und das Zwischenspaltleder 15 aufgetrennt wird. Die einer sattlereitechnischen Weiterverarbeitung zugänglichen Leichtlederteile 18 und Zwischenspaltlederteile 19 tragen bei dem gezeigten Ausführungsbeispiel jeweils eine Kaschierschicht, die in den Kaschierstationen 16 und 17 unter Wandstärkenvergrößerung aufgebracht werden.

Zusammenfassend ist folgendes festzustellen: Die Erfindung bezieht sich auf ein Verfahren zur Herstellung von sattlereitechnisch verarbeitbaren Lederteilen 18 aus vorgefertigtem Fertigleder 12 für den Automobilbereich. Das Fertigleder wird in einem Spaltprozess 13 unter Bildung einer zusammenhängenden und geschlossenen Dünnlederhaut 14 mit einer auf das Fertigleder bezogenen anteiligen Wandstärke von 15 bis 50 % und einer Spaltlederhaut 15 mit einer anteiligen Wandstärke von 50 bis 85 % aufgetrennt. Sodann wird die Dünnlederhaut 14 unter Bildung vorgegebener Dünnlederzuschnitte in einem Stanzprozess zugeschnitten und mit einem komplementären Kaschierzuschnitt aus gegenüber Leder spezifisch leichterem Textil-, Faser- und/oder Schaummaterial flächendeckend auf ihrer Rückseite kaschiert. Grundsätzlich kann auch die Zwischenspaltlederhaut unter Bildung von sattlereitechnisch verarbeitbaren Zwischenspaltlederteilen 19 zugerichtet, zugeschnitten und gegebenenfalls auf eine gewünschte Wandstärke gespalten und kaschiert werden.

## Patentansprüche

1. Verfahren zur Herstellung von sattlereitechnisch verarbeitbaren Lederteilen aus vorgefertigtem Fertigleder insbesondere für den Automobilbereich, **dadurch gekennzeichnet, dass** das Fertigleder (12) in einem Spaltprozess (13) unter Bildung einer zusammenhängenden und geschlossenen Dünnlederhaut (14) mit einer auf das Fertigleder bezogenen anteiligen Wandstärke von 15 bis 50 % und einer Zwischenspaltlederhaut (15) mit einer anteiligen Wandstärke von 50 bis 85 % aufgetrennt wird, dass die Dünnlederhaut (14) unter Bildung vorgegebener Dünnlederzuschnitte in einem Stanzprozess zugeschnitten wird, dass zu den Dünnlederzuschnitten komplementäre Kaschierzuschnitte aus gegenüber Leder spezifisch leichterem Textil- und/oder Kunststoffmaterial hergestellt werden und dass die Kaschierzuschnitte unter Bildung von Leichtlederteilen (18) flächendeckend auf die Rückseite der komplementären Dünnlederzuschnitte aufkaschiert werden.

2. Verfahren nach Anspruch 1, **dadurch gekennzeichnet, dass** die Zwischenspaltlederhaut (15) an ihrer Oberfläche zugerichtet und anschließend unter Bildung vorgegebener Zwischenspaltlederzuschnitte in einem Stanzprozess zugeschnitten und gegebenenfalls auf eine gewünschte Wandstärke gespalten wird, dass zu den Zwischenspaltlederzuschnitten komplementäre Kaschierzuschnitte aus Textil-, Faser- und/oder Schaummaterial hergestellt werden, und dass die Kaschierzuschnitte unter Bildung von Zwischenspaltlederteilen (19) auf die Rückseite der komplementären Zwischenspaltlederzuschnitte aufkaschiert werden.

3. Verfahren nach Anspruch 1 oder 2, **dadurch gekennzeichnet, dass** das vorgefertigte Fertigleder (12) eine Ausgangswandstärke von 1 bis 2 mm aufweist.

4. Verfahren nach einem der Ansprüche 1 bis 3, **dadurch gekennzeichnet, dass** die Kaschierzuschnitte als mehrschichtige Textilgewirke ausgebildet sind.

5. Verfahren nach einem der Ansprüche 1 bis 4, **dadurch gekennzeichnet, dass** die Kaschierzuschnitte als Abstandsgewirke mit einer sandwichartig zwischen zwei Gewirkeschichten eingeschlossenen Stäbchenschicht ausgebildet sind.

6. Verfahren nach Anspruch 5, **dadurch gekennzeichnet, dass** die beiden Gewirkeschichten unterschiedliche Dehnungswerte und/oder Zugfestigkeiten aufweisen.

7. Verfahren nach einem der Ansprüche 1 bis 6, **dadurch gekennzeichnet, dass** die Kaschierzuschnitte auf ihrer dem Dünnlederzuschnitt oder dem Zwischenspaltlederzuschnitt zugewandten Seite eine höhere Zugfestigkeit als auf ihrer anderen Seite aufweisen.

8. Verfahren nach einem der Ansprüche 1 bis 7, **dadurch gekennzeichnet, dass** die Kaschierzuschnitte auf ihrer dem Dünnlederzuschnitt oder dem Zwischenspaltlederzuschnitt abgewandten Breitseite eine elastische Schicht aufweisen.

9. Verfahren nach einem der Ansprüche 1 bis 8, **dadurch gekennzeichnet, dass** der Spaltprozess unter Verwendung eines umlaufenden Bandmessers mit unsymmetrisch angeschliffenem Schneidkeil durchgeführt wird, wobei die nur wenig angeschliffene Seite des Schneidkeils der zu erzeugenden Dünnlederhaut zugewandt ist.

## Claims

1. Method for the production of leather parts that can be processed using saddlery technology, from pre-manufactured finished leather, particularly for the automotive sector, **characterized in that** the finished leather (12) is split up in a splitting process (13), with the formation of a cohesive and closed thin-leather hide (14), having a proportional wall thickness, with reference to the finished leather, of 15 to 50%, and an intermediate split-leather hide (15) having a proportional wall thickness of 50 to 85%, that the thin-leather hide (14) is cut to size in a punching process, with the formation of predetermined thin-leather cutouts, that lamination cutouts that are complementary to the thin-leather cutouts are produced from textile and/or plastic material, which is specifically lighter as compared to leather, and that the lamination cutouts are laminated onto the back of the complementary thin-leather cutouts, over their full area, forming light leather parts (18).

2. Method according to claim 1, **characterized in that** the intermediate split-leather hide (15) is dressed on its surface, and subsequently cut to size in a punching process, with the formation of predetermined intermediate split-leather cutouts, and, if necessary, split to a desired wall thickness, that lamination cutouts made of textile, fiber and/or foam material, which are complementary to the punched leather cutouts, are produced, and that the lamination cutouts are laminated onto the back side of the complementary intermediate split-leather cutouts, forming intermediate split-leather parts (19).

3. Method according to claim 1 or 2, **characterized in that** the pre-manufactured finished leather (12) has an initial wall thickness of 1 to 2 mm.

4. Method according to one of claims 1 to 3, **characterized in that** the lamination cutouts are configured as multi-layer loom-knitted textiles.

5. Method according to one of claims 1 to 4, **characterized in that** the lamination cutouts are configured as spacer-loom-knitted fabrics having a wale layer enclosed between two loom-knitted fabric layers in sandwich-like manner.

6. Method according to claim 5, **characterized in that** the two loom-knitted fabric layers have different expansion values and/or tensile strengths.

7. Method according to one of claims 1 to 6, **characterized in that** the lamination cutouts have a greater tensile strength on their side that faces the thin-leather cutout or the intermediate split-leather cutout than on their other side.

8. Method according to one of claims 1 to 7, **characterized in that** the lamination cutouts have an elastic layer on their broad side facing away from the thin-leather cutout or the intermediate split-leather cutout.

9. Method according to one of claims 1 to 8, **characterized in that** the splitting process is carried out using a rotating band blade having an asymmetrically ground cutting wedge, wherein only the side of the cutting wedge that is less ground faces the thin-leather hide to be produced.

## Revendications

1. Procédé de production, à partir d'un cuir fini préfabriqué, de pièces de sellerie en cuir aptes au traitement technique, en particulier pour le domaine de l'automobile, **caractérisé par le fait que** le cuir fini (12) est scindé par un processus de clivage (13) avec formation d'une peau (14) en cuir mince, continue et fermée, munie d'une épaisseur de paroi dont le pourcentage représente de 15 à 50 % par rapport audit cuir fini, et d'une peau (15) en cuir de clivage intermédiaire, dotée d'une épaisseur de paroi dont le pourcentage représente de 50 à 85 % ; **par le fait que** ladite peau (14) en cuir mince est découpée par un processus de matriçage, avec formation de découpes prédéfinies en cuir mince ; **par le fait que** des découpes de doublage, complémentaires desdites découpes en cuir mince, sont fabriquées en un matériau textile et/ou synthétique spécifiquement plus léger que le cuir ; et **par le fait que** lesdites découpes de doublage sont contreplaquées sur la face postérieure desdites découpes complémentaires en cuir mince, avec recouvrement superficiel, en formant des pièces (18) en cuir léger.

2. Procédé selon la revendication 1, **caractérisé par le fait que** la peau (15) en cuir de clivage intermédiaire est apprêtée à sa surface, puis découpée par un processus de matriçage avec formation de découpes prédéfinies en cuir de clivage intermédiaire, et éventuellement fendue jusqu'à une épaisseur de paroi souhaitée ; **par le fait que** des découpes de doublage, complémentaires desdites découpes en cuir de clivage intermédiaire, sont fabriquées en un matériau textile, fibreux et/ou mousseux ; et **par le fait que** lesdites découpes de doublage sont contreplaquées sur la face postérieure desdites découpes complémentaires en cuir de clivage intermédiaire, avec formation de pièces (19) en cuir de clivage intermédiaire.

3. Procédé selon la revendication 1 ou 2, **caractérisé par le fait que** le cuir fini préfabriqué (12) présente une épaisseur de paroi initiale de 1 à 2 mm.

4. Procédé selon l'une des revendications 1 à 3, **caractérisé par le fait que** les découpes de doublage sont réalisées sous la forme de tricots textiles à couches multiples.

5. Procédé selon l'une des revendications 1 à 4, **caractérisé par le fait que** les découpes de doublage sont réalisées sous la forme de tricots d'espacement, comprenant une couche lamellée prise en sandwich entre deux couches de tricot.

6. Procédé selon la revendication 5, **caractérisé par le fait que** les deux couches de tricot présentent différentes valeurs d'allongement et/ou résistances à la traction.

7. Procédé selon l'une des revendications 1 à 6, **caractérisé par le fait que** les découpes de doublage présentent, sur leur côté tourné vers la découpe en cuir mince ou vers la découpe en cuir de clivage intermédiaire, une plus grande résistance à la traction que sur leur autre côté.

8. Procédé selon l'une des revendications 1 à 7, **caractérisé par le fait que** les découpes de doublage sont pourvues d'une couche élastique sur leur côté large tourné à l'opposé de la découpe en cuir mince ou de la découpe en cuir de clivage intermédiaire.

9. Procédé selon l'une des revendications 1 à 8, **caractérisé par le fait que** le processus de clivage est effectué avec utilisation d'un ruban de coupe en révolution, offrant un coin sectionneur à affûtage asymétrique, le côté dudit coin sectionneur, qui présente seulement un faible affûtage, étant tourné vers la peau en cuir mince devant être produite.
